# EUROPÄISCHE PATENTSCHRIFT

(11) **EP 2 189 425 B1**
(45) Veröffentlichungstag und Bekanntmachung des Hinweises auf die Patenterteilung: **12.12.2018**
(21) Anmeldenummer: 09012662.4
(22) Anmeldetag: 07.10.2009
(51) Int. Cl.: C03B 23/045

(54) **Haltefutter für Glasbearbeitungsmaschinen**
Holding clamp for glass processing machines
Sytème de préhension pour machines de traitement du verre

(30) Priorität: 19.11.2008 DE 102008058211
(43) Veröffentlichungstag der Anmeldung: 26.05.2010
(73) Patentinhaber: AMBEG Dr. J. Dichter GmbH, 10829 Berlin (DE)
(72) Erfinder: Langer, Matthias, 12355 Berlin (DE)
(74) Vertreter: Grünecker Patent- und Rechtsanwälte PartG mbB

(56) Entgegenhaltungen:
- DE-C- 419 614
- US-A- 1 797 836

## Beschreibung

Die Erfindung betrifft ein Haltefutter für mit Glasröhren beschickbare Glasbearbeitungsmaschinen, mit einem Beschickungskanal für die Glasröhren, mehreren beweglichen Klemmbacken, die um den Beschickungskanal herum angeordnet sind, einem in einer Betätigungsrichtung hin und her beweglichen Betätigungsorgan, das mit den Klemmbacken bewegungsübertragend gekoppelt ist, und mit wenigstens einem Spannorgan, durch das eine im Wesentlichen in Betätigungsrichtung auf das Betätigungsorgan wirkende Betätigungskraft erzeugbar ist, wobei das Spannorgan bei montiertem Haltefutter als Einheit unabhängig vom Beschickungskanal austauschbar neben dem Beschickungskanal angeordnet ist und das Haltefutter wenigstens eine Tragstruktur und einen in dem Kraftschluss zwischen Spannorgan und Betätigungsorgan angeordneten Hebel aufweist, der drehbar mit der Tragstruktur verbunden und bewegungsübertagend mit dem Betätigungsorgan gekoppelt ist.

Haltefutter der Eingangs genannten Art sind aus der DE 676 625 bekannt. Die gezeigten Betätigungsorgane weisen umlaufende Nuten auf, in die an den Enden der Klemmbacken angeordnete Vorsprünge greifen. Ein zentral, konzentrisch zum Beschickungskanal angeordnetes Spannorgan übt eine Betätigungskraft auf das Betätigungsorgan aus, die in Richtung der Klemmbacken wirkt und diese in den Beschickungskanal rückt. Eine zwischen den Klemmbacken angeordnete Glasröhre wird dadurch reibschlüssig gehalten.

Die DE 36 13 210 zeigt ein Haltefutter mit kugelförmigen Mitnehmern, die in dem Betätigungsorgan geführt sind. Das Betätigungsorgan wird wie bei der DE 676 625 durch ein konzentrisch zum Beschickungskanal angeordnetes Spannorgan mit einer Betätigungskraft beaufschlagt.

In der US 1 797 836 A ist eine Aufnahmevorrichtung gezeigt, bei der die Klemmbacken an schwenkbaren Balken angeordnet sind. Beim Fassen einer Glasröhre schwenken die Balken um, sodass sich die Klemmbacken an die Form der Glasröhre anschmiegen. Durch einen Hebel kann über ein Spannorgan eine Betätigungskraft auf ein Betätigungsorgan beaufschlagt werden, die in Richtung der Klemmbacken wirkt und diese in einen Beschickungskanal rücken.

Die DE 419 614 zeigt eine Vorrichtung zum zentrischen Einspannen und Drehen von zylindrischen Glaskörpern. Die zylinderförmigen Glaskörper werden mittels dreier kreisförmig angeordneten Walzen gehaltert, die mit Hebeln gleichzeitig und gleichgerichtet auf das Glaskörper zu bzw. vom Glaskörper weg bewegt werden können.

Ein Nachteil bekannter Haltefutter ist der hohe Aufwand, der bei einer Anpassung an unterschiedlich zu verarbeitende Halbzeuge aufgewendet werden muss. Die Halbzeuge können unterschiedliche Geometrien, Durchmesser oder Wandstärken aufweisen oder aus verschiedenen Materialien bestehen, die eine Anpassung des durch die Klemmbacken begrenzten Volumens oder durch die Klemmbacken auf das Halbzeug ausgeübten Haltekraft erfordern.

Folglich liegt der Erfindung die Aufgabe zugrunde, ein Haltefutter zu schaffen, das einfacher an die Eigenschaften unterschiedlicher Halbzeuge angepasst werden kann.

Diese Aufgabe wird erfindungsgemäß für ein Haltefutter der eingangs genannten Art dadurch gelöst, dass das Haltefutter ein wiederholt lösbares Adapterelement aufweist, das mit der Tragstruktur verbunden ist und ein Kupplungsorgan, welches an der Tragstruktur oder an dem Hebel in Richtung der Längserstreckung des Hebels verschiebbar ausgestaltet ist, zur Verbindung mit dem Spannorgan umfasst.

Die erfindungsgemäße Anordnung des Spannorgans erleichtert den Zugriff auf das Spannorgan und damit dessen Austausch oder Anpassung für eine Anpassung des Haltefutters an unterschiedliche Halbzeuge. Beispielsweise können Spannorgane in Form von Schraubenfedern
eingesetzt sein, die durch Federn unterschiedlicher Länge oder Steifigkeit in ihren Eigenschaften verändert werden.

Ein weiterer Vorteil des erfindungsgemäßen Haltefutters ist, dass der für das Spannorgan notwendige Bauraum ausgelagert werden kann. Dadurch kann der Spannbereich des Haltefutters verändert werden, ohne den Bauraum des Haltefutters maßgeblich zu vergrößern. Das Spannorgan kann exponiert oder desintegriert angeordnet sein, um den Zugriff auf das Spannorgan für dessen Austausch zu erleichtern. Das Spannorgan kann außerhalb des durch die übrigen Teile des Haltefutters eingenommenen Bauraumvolumens angeordnet sein. Auf diese Weise kann das Spannorgan der von dem Haltefutter gebildeten Baugruppe entnommen werden, ohne weitere Bauteile zu beeinträchtigen oder zu berühren.

Da das erfindungsgemäße Haltefutter wenigstens eine Tragstruktur und einen in den Kraftschluss zwischen Spannorgan und Betätigungsorgan angeordneten Hebel aufweist, der drehbar mit der Tragstruktur verbunden und bewegungsneutral bzw. bewegungsübertragend mit dem Betätigungsorgan gekoppelt ist, kann der Hebel die von dem Spannorgan erzeugte Betätigungskraft mit einem vorbestimmten Hebelverhältnis auf das Betätigungsorgan übertragen, so dass die Betätigungskraft vergrößert oder verkleinert wird. Eine Verkleinerung der Betätigungskraft über das Hebelverhältnis, in dem das Spannorgan näher an der drehbaren Verbindung zwischen Tragstruktur und Hebel angeordnet ist als die kraftübertragende Kopplung zwischen Hebel und Betätigungsorgan, hat eine Vergrößerung der von dem Betätigungsorgan zurückgelegten Betätigungsstrecke zur Folge. Dies ermöglicht beispielsweise den Einsatz kompakterer Spannorgane, die bei Erzeugung einer ausreichend großen Betätigungskraft eine nur geringe Wegstrecke zurücklegen.

Um die Anpassbarkeit des erfindungsgemäßen Haltefutters weiter zu verbessern, weist das Haltefutter ein wiederholt lösbares Adapterelement auf, das mit der Tragstruktur verbunden ist und ein Kupplungsorgan zur Verbindung mit dem Spannorgan umfasst. Das Adapterelement ermöglicht die Verwendung von Spannorganen unterschiedlicher Abmessungen oder mit unterschiedlich beabstandeten Kopplungsstellen. Das Adapterelement ermöglicht damit beispielsweise durch eine Vergrößerung des Abstandes von dem Kupplungsorgan zum Betätigungsorgan oder zum Hebel den Einbau längerer Spannorgane, beispielsweise längerer Zugfedern, um die zurückzulegende Betätigungsstrecke des Spannorgans zu verlängern.

Die Kupplungsorgane an der Tragstruktur oder an dem Hebel sind im Wesentlichen in Richtung der Längserstreckung des Hebels verschiebbar ausgestaltet, um eine Veränderung des Hebelverhältnisses ohne einen Austausch des Spannorgans zu ermöglichen. Alternativ kann ein Gelenk, über das der Hebel mit der Tragstruktur verbunden ist, gegenüber der Tragstruktur verschiebbar ausgestaltet sein.

Entsprechend kann über ein Hebelverhältnis, bei dem die Länge des Hebels zwischen Spannorgan und drehbarer Verbindung mit der Tragstruktur gegenüber der Länge des Hebels zwischen drehbarer Verbindung und Kopplung mit dem Betätigungsorgan verlängert ist, die von dem Spannorgan erzeugbare Betätigungskraft vergrößert werden. Es können also beispielsweise Federn mit einer kleineren Federkonstante und einem ausreichend großen Federnweg als Spannorgan eingesetzt werden, die aufgrund bei einer Dehnung der geringeren Federkraft leichter austauschbar sind.

Das Spannorgan kann von einer Druckfeder oder vorzugsweise von einer Zugfeder gebildet sein. Bei Verwendung einer Zugfeder ist im Gegensatz zu einer Druckfeder keine Führung der Feder notwendig. Alternativ kann das Spannorgan von einem beliebigen elastisch wiederholt verformbaren Körper gebildet sein, beispielsweise aus Kunststoff. Des weiteren können Aktoren als Spannorgane eingesetzt sein, beispielsweise Hydraulik- oder Pneumatikzylinder.

Um die Verwendung von Spannorganen zu ermöglichen, die eine Zugkraft erzeugen, kann der Hebel um wenigstens eine an der Tragstruktur angeordnete Drehachse drehbar gelagert sein und auf der dem Betätigungsorgan abgewandten Seite der Drehachse ein Kupplungsorgan zur Verbindung mit dem Spannorgan aufweisen. Für den Einsatz von Spannorganen, die eine Druckkraft erzeugen, können das Betätigungsorgan und das Spannorgan auf der gleichen Seite der Drehachse des Hebels angeordnet sein. Um die Drehachse des Hebels eindeutig und unverschiebbar festzulegen und die Reibung bei einer Drehung des Hebels zu verringern, kann der Hebel mit der Tragstruktur durch ein Gelenk verbunden sein.

Gemäß einer weiteren vorteilhaften Ausgestaltung des erfindungsgemäßen Haltefutters kann das Haltefutter mit einem Gelenkträger versehen sein, der das Gelenk zur Lagerung des Hebels umfasst und wiederholt lösbar mit der Tragstruktur verbunden ist. Dadurch wird ein Austausch des Gelenkträgers und somit eine Anpassung der Position des Gelenkes ermöglicht. Entsprechend dem Einsatz unterschiedlicher Spannorgane kann die Position des Hebels oder die Neigung des Hebels über die Abmessungen des Gelenkträgers und die damit verbundene Position des Gelenkes eingestellt werden.

Um das Haltefutter zu öffnen kann der Hebel wenigstens ein Kupplungselement aufweisen, durch das eine der Betätigungskraft entgegenwirkende Lösekraft in das Betätigungsorgan einleitbar ist. Der Hebel dient damit einerseits der Übersetzung der durch das Spannorgan erzeugten Betätigungskraft auf das Betätigungsorgan, andererseits erfüllt der Hebel damit die für die Glasbearbeitung notwendige Funktion des wiederholten Öffnens des Haltefutters.

Im Folgenden wird die Erfindung anhand einer Ausführungsform mit Bezug auf die Figuren beispielhaft erläutert. Dabei stellt die beschriebene Ausführungsform lediglich eine mögliche Ausgestaltung dar, die für den jeweiligen Anwendungsfall modifiziert werden kann. Einzelne, für sich vorteilhafte Merkmale können gemäß der obigen Beschreibung der vorteilhaften Ausgestaltungen bei der beschriebenen Ausführungsform hinzugefügt oder weggelassen werden. Es zeigen:
- Fig. 1: eine schematische Seitenansicht eines Haltefutters, teilweise im Schnitt;
- Fig. 2: eine schematische Draufsicht auf drei in einer Glasbearbeitungsmaschine nebeneinander angeordnete erfindungsgemäße Haltefutter;
- Fig. 3: eine schematische Perspektivansicht von drei in einer Glasbearbeitungsmaschine nebeneinander angeordnete erfindungsgemäße Haltefutter.

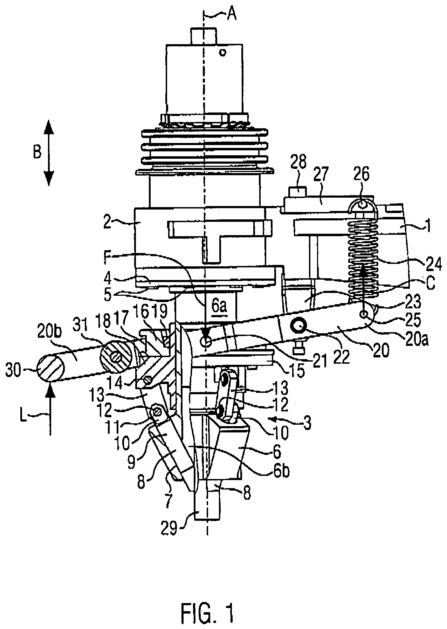

Zunächst wird der Aufbau eines erfindungsgemäßen Haltefutters mit Bezug auf Fig. 1 beschrieben.

An einem umlaufenden Gestell 1 einer Glasbearbeitungsmaschine ist ein Ausleger 2 befestigt. In einer hier nicht gezeigten Aufnahmeöffnung des Auslegers 2 ist das Haltefutter 3 eingesetzt. Das Haltefutter 3 weist einen rotationssymmetrischen Flansch 4 auf und ist über diesen mit einer Vielzahl von Befestigungsmitteln 5, die als Schrauben 5 ausgeführt sind, mit dem Ausleger 2 verbunden. Der Ausleger 2 bildet damit eine Tragstruktur 2 des Haltefutters 3, welche das Haltefutter 3 trägt.

Das Haltefutter 3 umfasst einen Grundkörper 6, der mit Führungen 7 für drei Klemmbacken 8 versehen ist. Ein rohrförmiger Abschnitt 6a des Grundkörpers 6 bildet ein Futterrohr 6a, das einen Beschickungskanal 6b umfasst. In den Beschickungskanal 6b kann das zu bearbeitende Halbzeug, beispielsweise ein Glasrohr, aufgenommen werden.

Die Klemmbacken 8 haben einen Führungsteil 9, der in der Führung 7 des Grundkörpers 6 geführt ist, und einen laschenartigen Fortsatz 10 mit einer Öffnung 11, in die ein Anschlussbolzen 12 aufgenommen ist. Die Anschlussbolzen 12 verbinden die Klemmbacken 8 jeweils mit einem Zwischenstück 13, das jeweils durch einen weiteren Anschlussbolzen 14 mit einem Betätigungsorgan 15 verbunden ist. Die Führungsteile 9 der Klemmbacken 8 sind in den Führungen 7 verschiebbar aufgenommen.

Das ringförmige Betätigungsorgan 15 ist auf dem Grundkörper in Betätigungsrichtung B verschiebbar gelagert und kann zur Betätigung des Haltefutters in Betätigungsrichtung B auf- und ab bewegt werden. Dabei überträgt das Betätigungsorgan 15 über die Zwischenstücke 13 Kräfte auf die Klemmbacken 8, durch welche diese in ihren Führungen 7 verschoben werden. Wird das Betätigungsorgan 15 in Richtung der Klemmbacken 8 verschoben, bewegen diese sich in den Beschickungskanal 6b hinein und ein in dem Beschickungskanal 6b befindliches Halbzeug wird von den Klemmbacken 8 reibschlüssig ergriffen. Entsprechend kann durch eine Aufwärtsbewegung des Betätigungsorgans 15, d.h. durch eine Verschiebung des Betätigungsorgans 15 in Richtung des Auslegers 2, das Haltefutter 3 geöffnet werden.

Das Betätigungsorgan 15 umfasst einen Nutring 16, der mit einer umlaufenden Nut 17 versehen ist. Der Nutring 17 ist auf einen für seine Aufnahme angepassten Absatz eines auf dem Grundkörper verschiebbaren Führungselementes 18 aufgeschoben und durch ein ringförmiges Sicherungselement 19 fixiert. Das Sicherungselement 19 weist einen im Wesentlichen trapezförmigen oder keilförmigen Querschnitt auf, der einem entsprechend trapezförmig ausgestalteten Querschnitt einer Aussparung in dem Nutring 16 entspricht. Indem das ringförmige Sicherungselement 19 in Betätigungsrichtung B in die Aussparung des Nutrings 17 hineingeschoben wird, drückt das im Querschnitt keilförmig ausgestaltete Sicherungselement 19 gegen die Innenfläche der trapezförmigen Aussparung des Nutrings 16. Es entsteht folglich eine reibschlüssige Verbindung zwischen dem Nutring 16 und dem Führungselement 18.

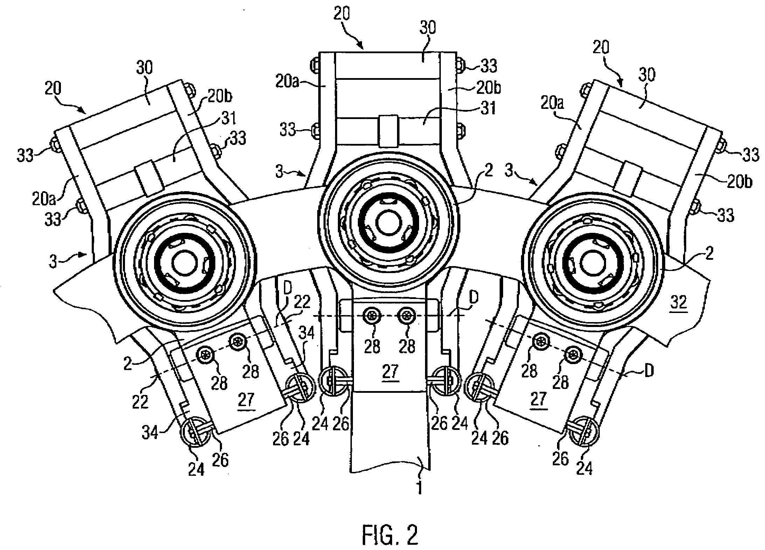

Das Betätigungsorgan 15 kann durch einen Hebel 20 in eine Betätigungsrichtung B nach oben oder nach unten verschoben werden. Der Hebel 20 umfasst zwei parallel zueinander verlaufende Schenkel 20a und 20b, die über Kupplungselemente 30, 31 miteinander verbunden sind. Der Hebel 20 greift über Rollenbolzen 21 auf einander gegenüberliegenden Seiten in die umlaufende Nut 17 des Nutrings 16 ein. Durch ein Gelenk 22 ist der Hebel 20 mit der Tragstruktur 2 um eine in Fig. 2 gezeigte Drehachse D drehbar verbunden. Das Gelenk 22 ist auf einem Gelenkträger 23 angeordnet, der sich von der Tragstruktur 2 in Richtung des Haltefutters 3 weg erstreckt und auf diese Weise eine an die Abmessungen des Haltefutters 3 angepasste Position des Hebels 20 ermöglicht.

Auf der sich von dem Gelenk 22 weg erstreckenden Seite des Hebels 20 ist ein Spannorgan 24 angeordnet, das über ein Kupplungsorgan 25, das in Form eines Bolzens 25 gestaltet ist, eine Zugkraft auf den Hebel 20 ausübt. Auch die Tragstruktur 2 umfasst ein Kupplungsorgan 26 in Form eines Bolzens 26, über den die Zugkraft des Spannorgans 24, das als Zugfeder 24 ausgestaltet ist, auf die Tragstruktur 2 übertragen wird. Das mit einem Sechskantprofil versehene Kupplungsorgan 26 ist in ein Adapterelement 27 eingesetzt, das an dem Grundkörper 2 über Befestigungselemente 28 verbunden ist. Zur Aufnahme des hakenförmigen Endes des Spannorgans 24 ist das Kupplungsorgan 26 mit einer Aussparung versehen, die ein seitliches Verrutschen des hakenförmigen Endes des Spannorgans 24 verhindert. Auch das Kupplungsorgan 25 weist eine entsprechende Vertiefung auf, die für eine Festlegung des Spannorgans 24 sorgt.

Die Zugfeder 24 übt an der Stelle des Kupplungsorgans 25 eine Zugkraft auf den Hebel 20 aus, der über den Rollenbolzen 21 und den Nutring 16 das Führungselement 18 von dem Ausleger 2 wegdrückt. Das Führungselement 18 gleitet auf dem Grundkörper 6 im Wesentlichen in Richtung der Führungen 7 und drückt über die Zwischenstücke 13 die Klemmbacken 8 in Richtung einer Symmetrieachse A, die der Mittellinie eines zwischen den Klemmbacken verlaufenden Beschickungskanals 6b entspricht. Die Klemmbacken 8 werden damit auf ein in dem Beschickungskanal 6b des Haltefutters 3 angeordnetes Glasrohr 29 bewegt bzw. auf das Glasrohr 29 gedrückt.

Die beiden Schenkel 20a und 20b des Hebels 20 sind über Kupplungselemente 30 und 31 miteinander verbunden, auf die eine dem Spannorgan 24 entgegenwirkende Lösekraft L aufgebracht werden kann. Wird eine Lösekraft L über ein Kupplungselement 30 oder 31 auf den Hebel ausgeübtt, werden die Klemmbacken im Wesentlichen in Richtung des Auslegers 2 verschoben und die reibschlüssige Halterung des Glasrohres 29 löst sich.

In den Ausleger 2 ist eine Lagerung integriert, in der der Grundkörper 6 und somit das komplette Haltefutter 3 rotierend gelagert ist. Im Betrieb der Maschine rotiert der Grundkörper 6, das Betätigungsorgan 15 und die mit dem Betätigungsorgan verbundenen Klemmbacken 8. Die Feder 24 drückt die Klemmflächen der Klemmbacken 8 gegen das eingespannte Rohr 29. Werden die Kupplungselemente 30 oder 31 gegen die Kraft der Feder 24 nach oben bewegt, so nimmt der Hebel 20 über die Rollenbolzen 21 und die umlaufende Nut 17 das Betätigungsorgan 15 mit. Dieses verändert auf dem Grundkörper 6 seine Axiallage gegenüber den Führungen 7. Dabei werden die Klemmbacken 8 in ihren Führungen 7 schräg nach oben bewegt und die Spannflächen der Klemmbacken 8 geben das Rohr 29 frei.

Die exzentrische Anordnung oder Desintegration des Spannorgans 24 ermöglicht eine einfache Anpassung des Haltefutters 3 an verschiedene Wandstärken oder Durchmesser des Glasrohres 29. Eine Anpassung des Haltefutters 3 erfolgt durch eine Anpassung der Haltekräfte, die von den Klemmbacken 8 auf das Rohr 29 ausgeübt werden. Die exponierte Anordnung des als Zugfeder ausgestalteten Spannorgans 24 ermöglicht dessen einfachen Austausch, um beispielsweise stärkere Federn 24 für eine vergrößerte Haltekraft zwischen den Klemmbacken 8 einzusetzen. Da das Spannorgan 24 an den Kupplungsorganen 25 und 26 lediglich eingehängt ist und auch bei vollständig montierter Glasbearbeitungsmaschine einfach und direkt zugänglich ist, kann das Spannorgan 24 ohne die Demontage weiterer Elemente einfach ausgetauscht werden. Um Spannorgane 24 unterschiedler Baugröße aufnehmen zu können, können unterschiedlich ausgestaltete Adapterelemente 27 vorgesehen sein, durch deren Austausch der Abstand zwischen den Kupplungsorganen 25 und 26 entsprechend den Abmessungen des Spannorgans 24 variiert werden kann.

Indem das Spannorgan 24 eine von ihm erzeugte Kraft C über den Hebel 20 auf das Betätigungsorgan 15 ausübt, kann über das Hebelverhältnis, das durch den Quotient des Abstandes zwischen Gelenk 22 und Kupplungsorgan 25 und des Abstandes zwischen Gelenk 22 und Rollenbolzen 21 definiert ist, die Größe der Betätigungskraft F eingestellt werden. Die auf das Betätigungsorgan 15 wirkende Betätigungskraft F kann beispielsweise vergrößert werden, indem die Länge des Hebels zwischen Gelenk 22 und Kupplungsorgan 25 vergrößert wird. Dadurch können Spannorgane 24 mit einer kleineren Federkonstante verwendet werden, die einfacher aus den Kupplungsorganen 25 und 26 aushängbar sind.

Alternativ kann die durch das Spannorgan 24 zurückzulegende Strecke verkleinert werden, indem die Länge des Hebels zwischen Gelenk 22 und Kupplungsorgan 25 verkleinert wird.

Fig. 2 zeigt eine schematische Draufsicht auf drei nebeneinander angeordneten Ausleger 2 einer Glasbearbeitungsmaschine.

Die Ausleger 2 sind kreisförmig nebeneinander angeordnet und Ober einen Steg 32 miteinander verbunden. Die Hebel 20 der Spannfutter 3 sind unterhalb des Steges 32 angeordnet, während die Adapterelemente 27 mit ihren Kupplungsorganen 26 oberhalb des Steges 32 befestigt sind. Die Adapterelemente 27 sind jeweils über zwei Befestigungselemente 28 in Form von Innensechskantschrauben 28 auf den Ausleger 2 verschraubt.

Jeder Hebel 20 umfasst zwei Schenkel 20a, 20b, die über die Kupplungselemente 30, 31 miteinander verbunden sind. Die Hebel 20 sind jeweils um eine Drehachse D drehbar mit dem jeweiligen Ausleger 2 verbunden. Die bolzenförmigen Kupplungselemente 30, 31 weisen dazu an ihren Enden Gewindebohrungen auf, in die Schrauben 33 eingesetzt sind. Von den Kupplungselementen 30, 31 aus erweitert sich der Zwischenraum zwischen den Schenkeln 20a und 20b bis zu der Stelle, an der der in Fig. 1 gezeigte Rollenbolzen 21 in die Fig. 1 gezeigte Nut 17 des Nutrings 16 eingreift. Anschließend verringert sich die lichte Weite zwischen den Schenkeln 20a und 20b in Richtung der Gelenke 22. Von den Gelenken 22 bis zu den hier nicht gezeigten Kupplungsorganen 25 für die Spannorgane 24 verlaufen die Schenkel 20a und 20b parallel. Die in Richtung der Spannorgane 24 weisenden Enden der Schenkel 20a und 20b sind an ihren nach innen weisenden Seiten mit Aussparungen 34 versehen, durch welche die Enden der Schenkel 20a und 20b insgesamt schmaler gestaltet sind und Raum zur Aufnahme der Spannorgane 24 bieten.

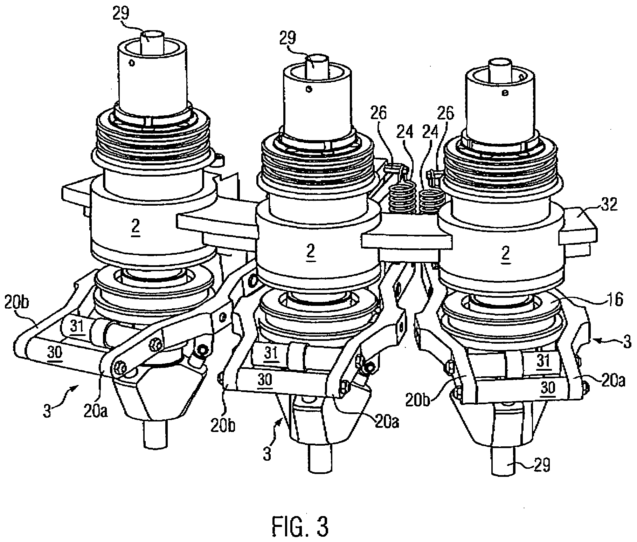

Fig. 3 zeigt eine schematische Perspektivansicht von drei nebeneinander angeordneten Auslegern 2 mit erfindungsgemäßen Haltefuttern 3. Die Spannorgane 24 sind auch bei montierter Glasbearbeitungsmaschine leicht zugänglich und entnehmbar, da sie auf den Kupplungsorganen 26 lediglich in Vertiefungen eingehängt sind. Durch die Anordnung der Spannorgane 24 neben den sonstigen Teilen der Baugruppe der Haltefutter 3 sind die Spannorgane 24 exponiert angeordnet und können, ohne ein weiteres Bauteil zu demontieren oder zu verschieben, entnommen oder ausgetauscht werden.

## Patentansprüche

1. Haltefutter (3) für mit Glasröhren (29) beschickbare Glasbearbeitungsmaschinen, mit einem Beschickungskanal (6b) für die Glasröhren (29), mehreren beweglichen Klemmbacken (8), die um den Beschickungskanal (6b) herum angeordnet sind, einem in einer Betätigungsrichtung (B) hin- und herbeweglichen Betätigungsorgan (15), das mit den Klemmbacken (8) bewegungsübertragend gekoppelt ist, und mit wenigstens einem Spannorgan (24), durch das eine im Wesentlichen in Betätigungsrichtung (B) auf das Betätigungsorgan (15) wirkende Betätigungskraft (F) erzeugbar ist, das Spannorgan (24) ist bei montiertem Haltefutter (3) als Einheit unabhängig vom Beschickungskanal (6b) austauschbar neben dem Beschickungskanal (6b) angeordnet, das Haltefutter (3) weist wenigstens eine Tragstruktur (2) und einen in dem Kraftschluss zwischen Spannorgan (24) und Betätigungsorgan (15) angeordneten Hebel (20) auf, der drehbar mit der Tragstruktur (2) verbunden und bewegungsübertragend mit dem Betätigungsorgan (15) gekoppelt ist, **dadurch gekennzeichnet, dass** das Haltefutter (3) ein wiederholt lösbares Adapterelement (27) aufweist, das mit der Tragstruktur (2) verbunden ist und ein Kupplungsorgan (26), welches an der Tragstruktur (2) oder an dem Hebel (20) in Richtung der Längserstreckung des Hebels (20) verschiebbar ausgestaltet ist, zur Verbindung mit dem Spannorgan (24) umfasst.

2. Haltefutter (3) nach Anspruch 1, **dadurch gekennzeichnet, dass** das Spannorgan (24) von einer Feder (24) gebildet ist.

3. Haltefutter (3) nach Anspruch 1, **dadurch gekennzeichnet, dass** das Spannorgan (24) von einer Zugfeder (24) gebildet ist.

4. Haltefutter (3) nach Anspruch 1, **dadurch gekennzeichnet, dass** der Hebel (20) um wenigstens eine an der Tragstruktur (2) angeordnete Drehachse (D) drehbar gelagert ist und auf der dem Betätigungsorgan (15) abgewandten Seite der Drehachse (D) ein Kupplungsorgan (25) zur Verbindung mit dem Spannorgan (24) aufweist.

5. Haltefutter (3) nach Anspruch 1, **dadurch gekennzeichnet, dass** das Haltefutter (3) mit einen Gelenkträger (23) versehen ist, der das Gelenk (22) umfasst und wiederholt lösbar mit der Tragstruktur (2) verbunden ist.

6. Haltefutter (3) nach Anspruch 1, **dadurch gekennzeichnet, dass** der Hebel (20) wenigstens ein Kupplungselement (30, 31) aufweist, durch das eine der Betätigungskraft (F) entgegenwirkende Lösekraft (L) in das Betätigungsorgan (B) einleitbar ist.

## Claims

1. Holding chuck (3) for glass processing machines that can be supplied with glass tubes (29), comprising a supply channel (6b) for the glass tubes (29), a plurality of movable clamping jaws (8) which are arranged around the supply channel (6b), an actuating member (15) which can be moved back and forth in an actuation direction (B) and is coupled to the clamping jaws (8) such that movement is transferred, and comprising at least one tensioning member (24) by means of which an actuation force (F) can be produced that acts on the actuating member (15) substantially in the actuation direction (B), and the tensioning member (24), when the holding chuck (3) is mounted, is arranged alongside the supply channel (6b) such that said member can be replaced as a unit independently of the supply channel (6b), and the holding chuck (3) has at least one support structure (2) and a lever (20) which is arranged in the frictional connection between the tensioning member (24) and the actuating member (15), is rotatably connected to the support structure (2) and is coupled to the actuating member (15) such that movement is transferred, **characterised in that** the holding chuck (3) has an adapter element (27) which can be repeatedly detached, is connected to the support structure (2) and, in order to be connected to the tensioning member (24), comprises a coupling member (26) which is designed to be movable on the support structure (2) or on the lever (20) in the direction of the longitudinal extension of the lever (20).

2. Holding chuck (3) according to claim 1, **characterised in that** the tensioning member (24) is formed by a spring (24).

3. Holding chuck (3) according to claim 1, **characterised in that** the tensioning member (24) is formed by a tension spring (24).

4. Holding chuck (3) according to claim 1, **characterised in that** the lever (20) is mounted so as to be rotatable about at least one axis of rotation (D) arranged on the support structure (2) and, on the side of the axis of rotation (D) that is remote from the actuating member (15), has a coupling member (25) for connecting to the tensioning member (24).

5. Holding chuck (3) according to claim 1, **characterised in that** the holding chuck (3) is provided with a joint support (23) which comprises the joint (22) and is connected to the support structure (2) such that it can be repeatedly detached.

6. Holding chuck (3) according to claim 1, **characterised in that** the lever (20) has at least one coupling element (30, 31) by means of which a detachment force (L) that counteracts the actuation force (F) can be introduced into the actuating member (B).

## Revendications

1. Système de préhension (3) pour machines de traitement du verre pouvant être alimentées en tubes de verre (29), comprenant un canal de chargement (6b) pour les tubes de verre (29), plusieurs mâchoires de serrage mobiles (8) qui sont disposées autour du canal de chargement (6b), un organe d'actionnement (15) à mouvement alternatif dans une direction d'actionnement (B), qui est relié aux mâchoires de serrage (8) par un couplage de transmission de mouvement, et comprenant au moins un organe de tension (24) qui permet de produire une force d'actionnement (F) qui agit sur l'organe d'actionnement (15) essentiellement dans la direction d'actionnement (B), l'organe de tension (24) est disposé, lorsque le système de préhension (3) est monté sous forme d'unité, à côté du canal de chargement (6b) d'une manière permettant son changement indépendamment du canal de chargement (6b), le système de préhension (3) comprend au moins une structure porteuse (2) et un levier (20) situé dans la connexion par friction entre l'organe de tension (24) et l'organe d'actionnement (15), lequel levier est relié à la structure porteuse (2) de manière rotative et à l'organe d'actionnement (4) par un couplage de transmission de mouvement, **caractérisé en ce que** le système de préhension (3) comprend un élément raccord (27) pouvant être détaché plusieurs fois qui est relié à la structure porteuse (2) et qui comprend un organe d'accouplement (26) réalisé déplaçable dans la direction de l'étendue longitudinale du levier (20) sur la structure porteuse (2) ou sur le levier (20), permettant la connexion à l'organe de tension (24).

2. Système de préhension (3) selon la revendication 1, **caractérisé en ce que** l'organe de tension (24) est formé par un ressort (24).

3. Système de préhension (3) selon la revendication 1, **caractérisé en ce que** l'organe de tension (24) est formé par un ressort de traction (24).

4. Système de préhension (3) selon la revendication 1, **caractérisé en ce que** le levier (20) est monté rotatif autour d'au moins un axe de rotation (D) situé sur la structure porteuse (2) et comporte, sur le côté de l'axe de rotation (D) opposé à l'organe d'actionnement (15), un organe d'accouplement (25) permettant la connexion à l'organe de tension (24).

5. Système de préhension (3) selon la revendication 1, **caractérisé en ce que** le système de préhension (3) est pourvu d'un support articulé (23) qui comprend l'articulation (22) et est relié à la structure porteuse (2) d'une manière permettant de le détacher plusieurs fois.

6. Système de préhension (3) selon la revendication 1, **caractérisé en ce que** le levier (20) comporte au moins un élément d'accouplement (30, 31) qui permet d'induire dans l'organe d'actionnement (B) une force de desserrage (L) agissant dans le sens contraire à la force d'actionnement (F).
